# FASCICULE DE BREVET EUROPEEN

(11) **EP 3 086 908 B1**
(45) Date de publication et mention de la délivrance du brevet: **15.11.2017**
(21) Numéro de dépôt: 14816299.3
(22) Date de dépôt: 22.12.2014
(51) Int. Cl.: B25J 9/16, G01N 29/30

(54) **REPÉRAGE DU CENTRE OUTIL ET DE L'ORIENTATION D'UNE SONDE ACOUSTIQUE DANS UN REPÈRE DE RÉFÉRENCE, PAR MÉTHODE ULTRASONORE**
BESTIMMUNG DES TOOL-CENTER-POINTS UND DER AUSRICHTUNG EINER AKUSTIKSONDE IN EINEM REFERENZRAHMEN MITTELS ULTRASCHALLVERFAHREN
DETERMINATION OF THE TOOL CENTRE POINT AND OF THE ORIENTATION OF AN ACOUSTIC PROBE IN A REFERENCE FRAME BY ULTRASOUND METHOD

(30) Priorité: 23.12.2013 FR 1363397
(43) Date de publication de la demande: 02.11.2016
(73) Titulaire: Airbus, 31700 Blagnac (FR)
(72) Inventeur: LE PINRU, Louis, F-44400 Reze (FR); COLIN, Nicolas, 44100 Nantes (FR); ITHURRALDE, Guillaume, F-31770 Colomiers (FR)
(74) Mandataire: Maupilier, Didier
(86) Numéro de dépôt international: PCT/EP2014/079021
(87) Numéro de publication internationale: WO 2015/097166

(56) Documents cités:
- WO-A1-2009/127610
- US-A- 4 155 243
- US-A- 4 821 206
- US-A1- 2009 282 895
- US-A1- 2009 299 688
- US-B1- 6 182 494

## Description

### DOMAINE DE L'INVENTION

L'invention se rapporte au domaine général des manipulateurs robots. Cette invention trouve une application particulièrement intéressante dans le domaine de la robotique associé à celui du contrôle non destructif.

### CONTEXTE DE L'INVENTION - ART ANTERIEUR

Dans le domaine de la fabrication de pièces mécaniques ou du contrôle de pièces réalisées au moyen de bras mécaniques robotisés, il est généralement nécessaire de déterminer avec précision la position du centre outil ou TCP ("Tool Center Point") selon la dénomination anglo-saxonne, et l'orientation de l'axe de référence de l'outil monté sur le bras manipulateur dans le repère de référence du robot. De la sorte, l'automate qui gère les mouvements du robot et du bras manipulateur peut déduire à tout instant la position et l'orientation précise de l'outil dans l'espace. Pour un outil d'usinage par exemple, l'axe de référence est en général l'axe de pénétration de l'outil dans la pièce à usiner.

Pour permettre au robot de prendre en compte le positionnement et l'orientation de l'outil avec précision, on a généralement recours à une phase d'apprentissage, préalable à l'utilisation de l'outil.

Une solution connue pour réaliser un tel apprentissage consiste, partant des dimensions et de la géométrie de l'outil considéré et connaissant la façon dont l'outil est monté sur le bras manipulateur du robot, à prendre en compte ces paramètres pour détermine, a priori, la position et l'orientation de l'outil dans un repère lié au robot.

Dans la mesure où elle ne requiert aucune opération préalable à l'utilisation du robot, une telle détermination "a priori" présente un avantage économique certain. Cependant une telle méthode présente des limitations en termes de précision dans la mesure où le positionnement de l'outil sur le robot après montage est déterminé aux incertitudes de positionnement près.

Une autre solution connue pour réaliser un tel apprentissage consiste à réaliser un étalonnage du robot équipé de l'outil en utilisant une pointe ou un ensemble de pointes de référence, occupant des positions fixes et définissant des points et des axes de référence, au contact desquels on vient positionner successivement soit le centre outil lui-même, soit avec une pointe montée sur le bras manipulateur et disposée au centre outil.

Une telle méthode permet de réaliser un apprentissage beaucoup plus précis que la méthode décrite précédemment. En revanche, elle requiert avant utilisation de l'outil, la mise en oeuvre d'une phase d'étalonnage relativement délicate et fastidieuse, généralement réalisée en mode manuel par un opérateur humain. En outre, une telle méthode est réellement efficace si l'outil mis en oeuvre par le robot est un outil mécanique dont le TCP est facilement identifiable. En revanche, si le centre outil est un point virtuel, l'utilisation des procédures d'étalonnage connues sont plus difficiles à mettre en oeuvre. C'est en particulier le cas si l'outil utilisé est un outil destiné au contrôle d'intégrité de pièces en matériau composite qui comporte une sonde acoustique synthétique. Pour un tel outil le centre outil, qui correspond au centre de la sonde et l'axe de l'outil qui est défini par la direction normale au plan de la sonde et passant par le centre de la sonde, n'ont pas de support matériel. Le document US 4 155 243 A divulgue un procédé de repérage d'une sonde acoustique montée sur le bras manipulateur d'un robot en utilisant un objet de référence, où le décalage dans la direction de l'axe Z est identifié. En outre, bien qu'une calibration de l'orientation de la sonde acoustique soit mentionnée, aucun détail est divulgué sur le procédé utilisé.

### PRESENTATION DE L'INVENTION

Un but de l'invention est de proposer une méthode permettant de réaliser le repérage du "centre outil" d'un outil comportant une sonde acoustique synthétique, monté sur un bras robotisé, sans avoir à utiliser d'outillage annexe pour procéder à ce repérage.

A cet effet l'invention a pour objet un procédé pour réaliser le repérage en position et orientation d'un outil comportant une sonde acoustique synthétique montée sur le bras manipulateur d'un robot, le plan de ladite sonde acoustique étant défini par deux axes X et Y perpendiculaires, ledit repérage étant réalisé dans un repère de référence connu dudit robot. Le procédé selon l'invention comporte principalement les étapes suivantes:
- une première étape durant laquelle on détermine, au moyen de la sonde acoustique, la distance entre elle-même et un point de la surface d'une cible ponctuelle de référence occupant une position fixe. Cette distance est déterminée pour trois positions différentes de la sonde acoustique vis-à-vis de la cible, la position de la sonde acoustique par rapport au bras manipulateur étant déduite géométriquement des mesures réalisées;
- une deuxième étape durant laquelle on utilise des mesures d'amplitude et/ou de temps de vol réalisées par la sonde acoustique, pour effectuer le repérage d'un axe fixe X' de référence, matérialisé par une cible tubulaire rectiligne, en déplaçant la sonde acoustique et en la positionnant successivement en différents points dudit axe X', ainsi que pour aligner l'axe X de référence de la sonde acoustique sur l'axe fixe de référence X';
- une troisième étape durant laquelle on déplace la sonde acoustique suivant un axe Y' perpendiculaire à l'axe fixe de référence X' et on utilise des mesures d'amplitude et/ou de temps de vol, réalisées par la sonde acoustique elle-même, pour modifier l'orientation du plan de la sonde acoustique de façon à aligner l'axe Y de la sonde acoustique sur cet axe perpendiculaire Y'.

Selon l'invention, l'alignement de l'axe X de la sonde acoustique parallèlement à l'axe de référence X' et l'alignement de l'axe Y de cette même sonde sur l'axe Y' définit une orientation de référence de la sonde acoustique à partir de laquelle sont déterminés les changements d'orientation imposés à la sonde acoustique par le bras manipulateur du robot.

Selon une modalité de mise en oeuvre du procédé selon l'invention, le repérage de la cible fixe de référence est réalisé en approchant la sonde acoustique de ladite cible fixe de référence, suivant une direction d'approche donnée, jusqu'à ce que la zone de focalisation de la sonde acoustique soit placée sur la surface de la cible, et en mesurant la distance séparant alors la sonde acoustique de la surface de la cible. Cette opération est répétée pour trois directions d'approche distinctes.

Selon une autre modalité de mise en oeuvre, le repérage de l'axe de référence X' est réalisé en approchant la sonde acoustique de l'axe de référence X' en différents points de ce dernier, jusqu'à ce que la zone de focalisation de la sonde acoustique soit placée au niveau de l'axe X' pour chaque point de mesure considéré, puis en déterminant pour chaque point le capteur ayant reçu le signal réfléchi avec l'amplitude maximale pour un même temps de vol considéré.

Selon une autre modalité de mise en oeuvre, l'alignement, au cours de la deuxième étape, de l'axe X de la sonde acoustique avec l'axe de référence X' est réalisé, après repérage de l'axe de référence X', en actionnant le bras manipulateur du robot de façon à placer la sonde acoustique selon une orientation telle que le signal réfléchi par l'axe de référence soit reçu avec une amplitude maximum par des capteurs formant une même première rangée alignée suivant l'axe X de la sonde et que les capteurs d'extrémités de cette rangée reçoivent le signal réfléchi par l'axe X' de référence avec des amplitudes et des temps de vol sensiblement égaux.

Selon une autre modalité de mise en oeuvre, l'alignement de l'axe X de la sonde acoustique avec l'axe de référence X' est réalisé en actionnant le bras manipulateur du robot de façon à placer la sonde acoustique selon une orientation telle que le signal réfléchi par l'axe de référence X' soit reçu avec une amplitude maximum par des capteurs formant la rangée médiane de la sonde acoustique suivant l'axe Y.

Selon une autre modalité de mise en oeuvre, au cours de la troisième étape, la sonde acoustique est déplacée par le bras manipulateur en translation suivant une direction Y' perpendiculaire à l'axe fixe de référence X', de telle façon que le signal réfléchi par l'axe de référence X' soit reçu avec une amplitude maximale par des capteurs formant une seconde rangée, distincte de la première rangée de capteurs utilisée pour aligner l'axe X de la sonde sur l'axe de référence X'. Puis elle subit un mouvement de rotation de son plan autour de l'axe X de telle façon que l'amplitude du signal acoustique reçu par les capteurs formant cette seconde rangée soit sensiblement égale à celle reçue au cours de la seconde étape par les capteurs formant la première rangée.

Selon une autre modalité de mise en oeuvre, la position de la cible acoustique ainsi que la position et l'orientation de l'axe de référence dans le repère de référence sont déterminées a priori, et un premier positionnement approché de la sonde acoustique dans le repère de référence est défini de manière théorique, de sorte que les étapes du procédé sont réalisées de manière automatique par l'automate qui gère les déplacements du bras manipulateur du robot et la mise en oeuvre de la sonde acoustique.

L'invention permet avantageusement d'améliorer et de simplifier le processus de repérage du positionnement précis d'un outil comportant une sonde acoustique dans le repère du robot manipulateur sur lequel il est monté, ce positionnement étant déterminé par la position du centre outil ou TCP et par l'orientation de l'outil.

L'invention intéresse avantageusement aussi bien des Roboticiens chargés du contrôle non destructif de pièces mécaniques dans un environnement industriel, qu'à des opérateurs exerçant dans un contexte de laboratoire.

### DESCRIPTION DES FIGURES

Les caractéristiques et avantages de l'invention seront mieux appréciés grâce à la description de l'exemple de mise en oeuvre qui suit, description qui s'appuie sur les figures annexées qui présentent:
- la figure1, une représentation schématique d'une sonde acoustique synthétique telle que celle utilisée dans l'exemple de mise en oeuvre considéré;
- la figure 2, une représentation schématique d'un exemple de dispositif permettant de mettre en oeuvre le procédé selon l'invention;
- la figure 3, un organigramme de principe des principales étapes du procédé selon l'invention ;
- les figures 4 et 5, des illustrations relatives à la seconde étape du procédé selon l'invention;
- les figures 6 et 7, des illustrations relatives à la troisième étape du procédé selon l'invention.

### DESCRIPTION DETAILLEE

Le principe de l'invention consiste à tirer parti du fait que l'outil monté sur un bras manipulateur d'un robot comporte une sonde acoustique, pour déterminer la position du centre outil, c'est-à-dire du centre de référence de la sonde acoustique, et l'orientation de l'outil dans le repère du robot.

Pour ce faire l'invention propose d'utiliser les informations fournies par la sonde acoustique, informations tirées des mesures de temps de vol et d'amplitude du signal reçu principalement.

La description qui suit présente un mode de mise en oeuvre du procédé selon l'invention illustrant ce principe de calibration par mesures acoustiques, au travers d'un exemple de mise en oeuvre.

L'outil considéré ici est un outil de contrôle non destructif d'une pièce en matériau composite, qui comporte une sonde acoustique synthétique formé par un arrangement d'une pluralité de capteurs (transducteurs acoustiques). Cet exemple de mise en oeuvre n'a bien entendu nullement pour but de limiter la portée ou l'étendue de l'invention. En particulier, il apparaitra évident à l'homme du métier que le principe de repérage exposé ici est naturellement utilisable dans le cas d'un outil comportant une sonde acoustique quelconque, synthétique ou non.

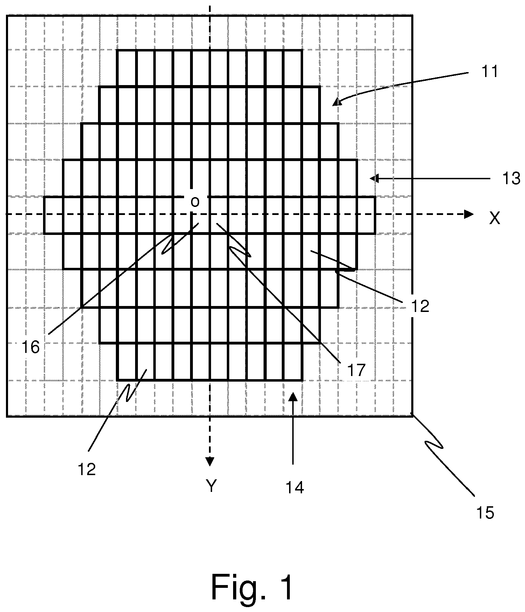

Dans l'exemple proposé, la sonde acoustique synthétique 11 est constituée d'une pluralité de capteurs acoustiques élémentaires 12 disposés selon un schéma matriciel plan tel qu'illustré par la figure 1. Les capteurs élémentaires 12 sont placés sur un support plan 15 de façon à former un arrangement en lignes 13 et colonnes 14 dont la géométrie est définie par le repérage de la position des différents capteurs dans un système d'axes orthogonaux X et Y qui détermine l'orientation de la sonde dans l'espace. L'arrangement des différents capteurs formant la sonde acoustique définit un point de référence qui correspond par exemple aux capteurs centraux 16 et 17 de la sonde.

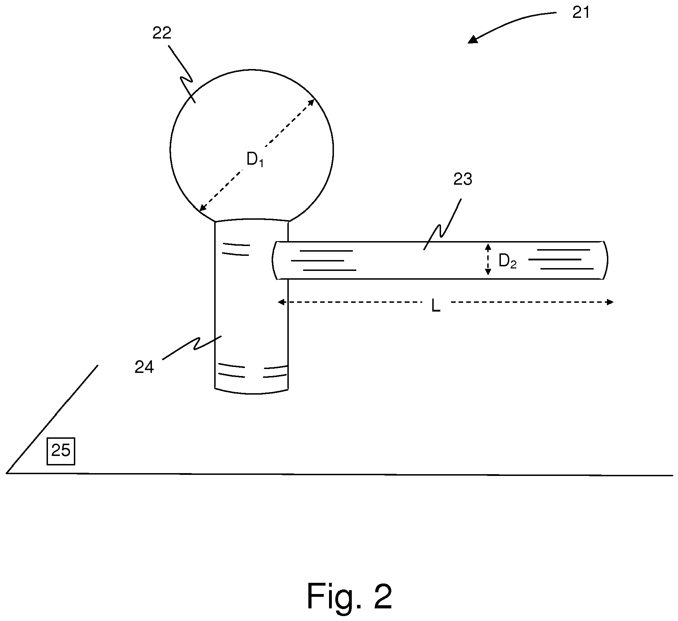

Le procédé selon l'invention utilise un dispositif annexe de repérage, occupant une position fixe donnée, un dispositif tel que celui illustré par la figure 2 par exemple. Ce dispositif 21 comporte un élément présentant une surface sphérique, une bille 22 par exemple. Cette bille est associée à un élément allongé rectiligne, présentant une section de largeur donnée, une tige 23 de section circulaire préférentiellement, qui constitue un axe de référence X'. Selon l'invention, le diamètre de la bille 22 est déterminé de façon à constituer un élément ponctuel vu de la sonde acoustique, compte tenu de la résolution de cette dernière. De même le diamètre de la tige 23 est déterminé de façon à présenter, vu de la sonde acoustique 11, une arête longitudinale formant un élément réfléchissant les ondes acoustiques. Dans le cas d'une sonde acoustique synthétique pris ici comme exemple, le diamètre de la bille 22 et la section de la tige 23 sont choisis en fonction des dimensions et de l'espacement des capteurs élémentaires 12 constituant la source 11.

Dans un mode de réalisation préféré, le dispositif annexe 21 selon l'invention comporte, comme illustré sur la figure 2, une bille sphérique 22 d'un diamètre déterminé, montée sur un support 24 et sur laquelle est fixée la tige 23 formant l'axe fixe de référence X'. L'ensemble est, de préférence, configuré de telle façon que lorsque le dispositif est posé sur un plan de référence 25 (plan horizontal par exemple) la tige 23 est localisée dans un plan parallèle au plan de pose du dispositif.

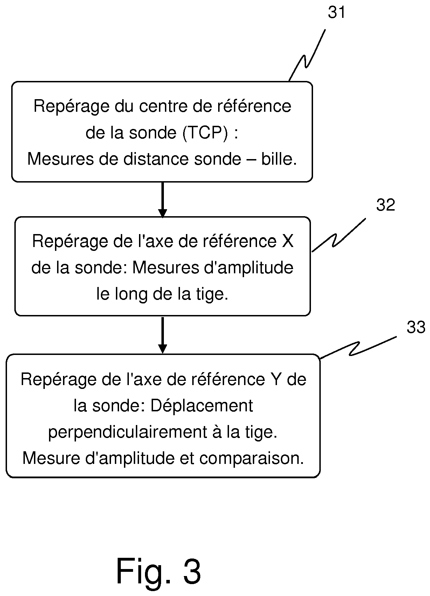

Comme l'illustre l'organigramme de la figure 3, le procédé selon l'invention met en oeuvre le dispositif 21 pour implémenter les opérations de repérage suivantes:
- une première étape 31 de repérage de la position du point de référence de la sonde (TCP) par mesure de distance (mesure de temps de vol) de la bille 22 par la sonde acoustique 11 sous différentes orientations;
- une deuxième étape 32 de repérage de l'axe X de référence de la sonde acoustique 11 réalisée en positionnant l'axe X parallèlement à l'axe X' de la tige 23, à partir de mesures de distance réalisées en différents points de la tige 23;
- une troisième étape 33 de repérage de l'axe Y de référence de la sonde acoustique 11 réalisée à partir de mesures de distance effectuées en déplaçant la sonde acoustique perpendiculairement à la tige 23.

La première étape du procédé à pour fonction de permettre la détermination de la position précise de la sonde acoustique 11, autrement dit celle de son centre, dans un repère de référence du robot, et par suite la position de la sonde acoustique 11 par rapport à l'extrémité du bras manipulateur du robot. Les deuxième et troisième étapes ont quant à elles pour fonction de permettre de déterminer une orientation de référence de la sonde acoustique 11, définie dans ce même repère de référence et par suite l'orientation de la sonde vis-à-vis de l'extrémité du bras manipulateur. Cette orientation de référence est par exemple définie comme étant l'orientation dans l'espace de l'axe normal au plan de la sonde acoustique.

Selon l'invention la première étape 31 consiste à amener la sonde acoustique 11 à proximité de la surface de la bille 22 et à effectuer au moins trois mesures de distance en positionnant la sonde en trois endroits différents au voisinage de la bille, de telle façon les mesures de distance correspondantes soient effectuées suivant trois directions d'approche sensiblement distinctes. Pour chaque positionnement on enregistre en outre la position de l'extrémité du bras manipulateur. On obtient ainsi trois mesures, suivant trois directions différentes, qui sont ensuite exploitées conjointement par l'automate qui pilote le bras manipulateur pour déterminer géométriquement, de manière connue, la position de la sonde acoustique 11 dans le repère de référence du robot. Les distances bille-sonde sont ici déterminées, de manière connue, par mesure des temps de vol de l'onde acoustique émise.

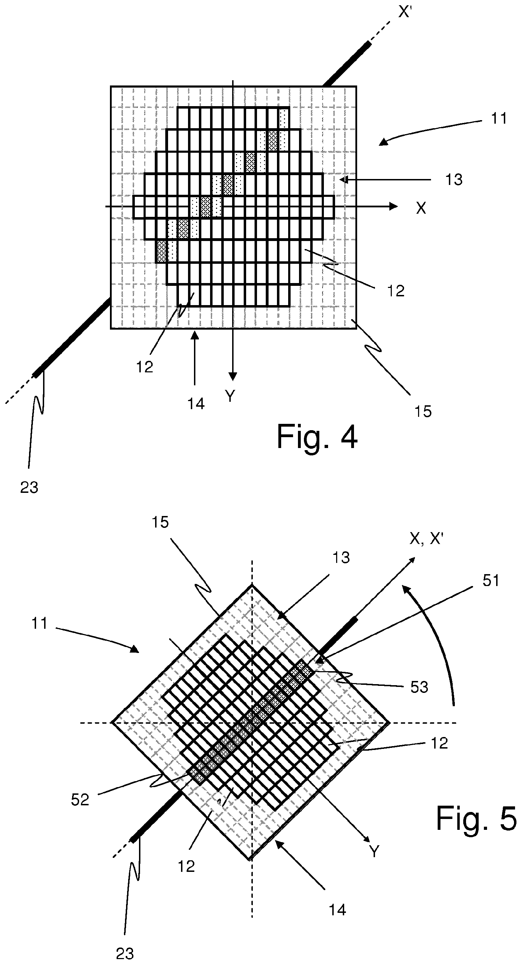

L'étape 32 est illustrée par les figures 4 et 5. Elle consiste à positionner l'axe de référence X de la sonde acoustique suivant une direction fixe connue du robot ou plus exactement de l'automate qui gère les mouvements du bras du robot.

Pour positionner l'axe de référence X dans une direction connue du robot, on fait, dans un premier temps, se déplacer la sonde acoustique 11, et donc l'extrémité du bras du robot, de façon à placer la sonde acoustique en regard de la tige 23.

Puis, dans un deuxième temps, on déplace la sonde acoustique 11, en translation, parallèlement à la tige 23, autrement dit parallèlement à l'axe fixe de référence X', en enregistrant le déplacement de l'extrémité du bras manipulateur, sans en modifier l'orientation, et on effectue ponctuellement des mesures d'amplitude du signal acoustique reçu par les différents capteurs. Pour ce faire, on émet une onde acoustique dans la direction normale au plan de la sonde 11 et on détermine ceux des capteurs qui captent l'onde réfléchie par la tige 23 avec la plus forte amplitude. La tige 23 étant par principe rectiligne, ces capteurs sont alignés selon une direction donnée dans le plan de la sonde.

Enfin, dans un troisième temps, en procédant à des mesures d'amplitude du signal acoustique réfléchi par la tige 23, on agit sur l'extrémité du bras manipulateur de façon à déplacer la sonde acoustique 11 et à la faire pivoter pour placer l'axe de référence X de la sonde parallèlement à l'axe fixe X' de référence que constitue la tige 23, de façon à ce que les capteurs captant l'onde réfléchie par la tige 23 avec la plus forte amplitude se trouvent former une première rangée 51 alignée sur l'axe X.

On actionne alors à nouveau l'extrémité du bras manipulateur de façon à faire pivoter le plan de la sonde acoustique selon un axe perpendiculaire à l'axe de la tige 23 de façon à ce que les capteurs 52 et 53 situés aux extrémités de l'alignement de capteurs 51 précédent captent l'onde réfléchie avec des temps de vol sensiblement identiques.

Ainsi, une fois la deuxième étape effectuée, la sonde acoustique est positionnée de façon à ce que son axe X de référence soit parallèle à l'axe X' de la tige 23 dont la direction est connue du robot et que les capteurs captant l'onde réfléchie par la tige 23 avec la plus forte amplitude se trouvent alignés sur l'axe X.

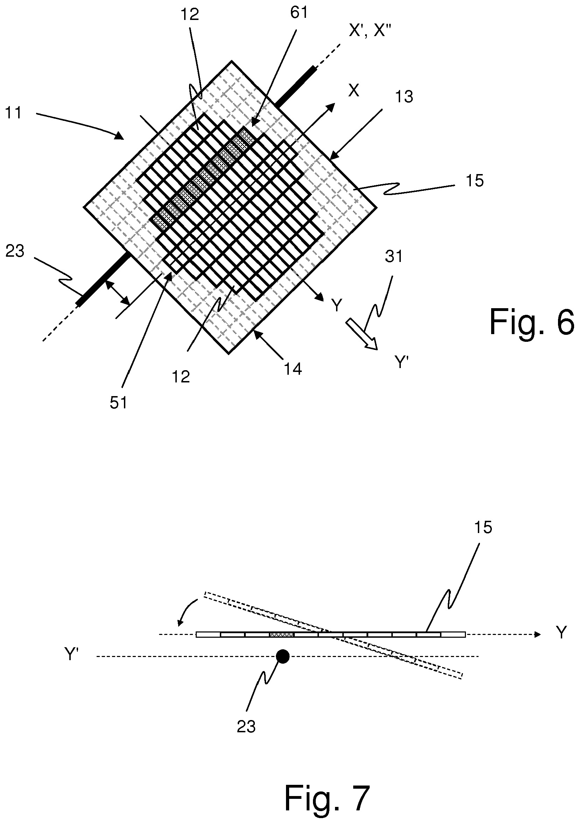

L'étape 33, illustrée par les figures 6 et 7, consiste alors à positionner l'axe de référence Y de la sonde selon une direction connue du robot.

Pour réaliser ce positionnement on fait, dans un premier temps, se déplacer en translation la sonde acoustique 11 selon une direction Y' perpendiculaire à l'axe X' de la tige 23, en enregistrant le déplacement de l'extrémité du bras manipulateur, sans modifier l'orientation de la sonde acoustique. On déplace la sonde acoustique de telle façon que les capteurs captant l'onde réfléchie par la tige 23 avec la plus forte amplitude se trouvent sur une rangée 61 alignée sur un axe X" du plan de la sonde parallèle à l'axe X et distinct de ce dernier. Le déplacement effectué définit ainsi un axe Y' perpendiculaire à l'axe X, dont l'orientation est connue du robot.

Par suite le déplacement selon cet axe Y' étant réalisé, on compare l'amplitude et/ou le temps de vol mesurés par les capteurs de la rangée 61, alignée sur l'axe X", de façon à déterminer si elle est différente de celle mesurée au cours de l'étape 32 par les capteurs de la rangée 51 alignée sur l'axe X. Si tel est le cas on effectue une rotation du plan de la sonde autour de l'axe X, comme illustré par la figure 7, de façon à obtenir un signal correspondant à un même temps de vol dans les deux cas. Dès lors, l'axe de référence Y se trouve aligné sur l'axe Y'.

Selon l'invention, l'enregistrement des déplacements effectués par l'extrémité du bras manipulateur au cours des deux étapes 32 et 33 pour suivre l'axe de la tige 23 et le décalage suivant l'axe Y' associé à celui des mouvements de rotation opérés pour modifier l'orientation de la sonde acoustique 11 au cours de ces mêmes étapes, sont utilisés pour identifier une orientation de référence du plan de la sonde (i.e. les axes X et Y) selon des directions connues X' et Y' définies dans le repère de référence. De la sorte, si l'on souhaite faire rallier à la sonde acoustique 11 une position précise en lui donnant une orientation définie, il suffit de déplacer l'extrémité du bras manipulateur et de modifier l'orientation de la sonde acoustique depuis cette orientation connue de façon à lui faire adopter l'orientation désirée.

Tel que décrit précédemment le procédé de calibration selon l'invention met avantageusement à profit la capacité de la sonde acoustique 11 que comporte l'outil utilisé à réaliser à la fois des mesures d'amplitude du signal acoustique reçu et des mesure de temps de vol de l'onde acoustique, ces mesures étant utilisées pour déterminer la position de la sonde vis-à-vis du bras manipulateur et une orientation de référence de la sonde acoustique par rapport aux repère fixes utilisés pour la calibration. On peut ainsi, sans mettre en oeuvre d'outillage complémentaire au niveau de l'outil, définir un positionnement de référence de la sonde acoustique, positionnement qui, en phase opérationnelle, permet au robot de déterminer précisément les changements de position et d'orientation du bras manipulateur à opérer pour positionner la sonde acoustique 11 à l'endroit voulu au dessus de la pièce à tester, avec l'orientation voulue par rapport à la surface de la pièce.

Comme cela a été dit précédemment, les opérations d'apprentissage sont réalisées alors que le robot dont le bras manipulateur porte l'outil considéré est placé dans un mode de fonctionnement approprié.

Ce mode de fonctionnement peut être un mode manuel, dans lequel les mouvements du bras manipulateur sont commandés directement par un opérateur, l'automate chargé du contrôle du robot effectuant alors simplement l'acquisition des variations de position et d'attitude du bras manipulateur au cours des différentes phases, les mesures effectuées par la sonde acoustique étant alors interprétées par l'opérateur pour juger du positionnement correct de la sonde acoustique pour chaque phase.

Alternativement ce mode de fonctionnement peut être un mode automatique. Dans ce cas l'automate dispose d'informations théoriques prédéterminées de positionnement et d'orientation de la sonde acoustique 11, ainsi que d'informations de positionnement des éléments fixes de référence (bille 22 et tige 23), le rôle de l'apprentissage étant alors d'affiner ces informations. L'automate procède alors par lui-même, à chaque étape, à un positionnement a priori de la sonde acoustique 11 et affine ce positionnement grâce aux mesures qu'elle délivre, de façon à ce que le point visé, un point à la surface de la bille 22 ou un point à la surface de la tige 23, soit situé dans le plan de focalisation de la sonde acoustique 11.

## Revendications

1. Procédé pour réaliser le repérage en position et orientation d'un outil comportant une sonde acoustique synthétique (11) montée sur le bras manipulateur d'un robot, le plan de ladite sonde acoustique étant défini par deux axes X et Y perpendiculaires, ledit repérage étant réalisé dans un repère de référence connu dudit robot, **caractérisé en ce qu'**il comporte les étapes suivantes:
- une première étape (31) durant laquelle on détermine au moyen de la sonde acoustique (11) la distance entre la sonde acoustique et un point de la surface d'une cible ponctuelle de référence (22) occupant une position fixe, cette distance étant déterminée pour trois positions différentes de la sonde acoustique (11) vis-à-vis de la cible (22), la position de la sonde acoustique (11) par rapport au bras manipulateur étant déduite géométriquement des mesures réalisées;
- une deuxième étape (32) durant laquelle on utilise des mesures d'amplitude et/ou de temps de vol réalisées par la sonde acoustique (11) pour effectuer le repérage d'un axe fixe X' de référence, matérialisé par une cible tubulaire rectiligne (23), en déplaçant la sonde acoustique (11) et en la positionnant successivement en différents points dudit axe X' et pour aligner l'axe X de référence de la sonde acoustique (11) sur l'axe fixe de référence X';
- une troisième étape (33) durant laquelle on déplace la sonde acoustique (11) suivant un axe Y' perpendiculaire à l'axe fixe de référence X' et on utilise des mesures d'amplitude et/ou de temps de vol réalisées par la sonde acoustique (11) pour modifier l'orientation du plan de la sonde acoustique (11) de façon à aligner l'axe Y de la sonde acoustique sur cet axe perpendiculaire Y';
l'alignement de l'axe X de la sonde parallèlement à l'axe de référence X' et l'alignement de l'axe Y de la sonde sur l'axe Y' définissant une orientation de référence de la sonde acoustique (11) à partir de laquelle sont déterminés les changements d'orientation imposés à la sonde acoustique (11) par le bras manipulateur du robot.

2. Procédé selon la revendication 1, **caractérisé en ce que** le repérage de la cible fixe (22) de référence est réalisé en approchant la sonde acoustique (11) de ladite cible fixe de référence suivant une direction d'approche donnée jusqu'à ce que la zone de focalisation de la sonde acoustique (11) soit placée sur la surface de la cible (22), et en mesurant la distance séparant alors la sonde acoustique (11) de la surface de la cible (22), cette opération étant répétée pour trois directions d'approche distinctes.

3. Procédé selon l'une des revendications 1 ou 2, **caractérisé en ce que** le repérage de l'axe de référence X' est réalisé en approchant la sonde acoustique (11) de l'axe de référence X' en différents points de ce dernier, jusqu'à ce que la zone de focalisation de la sonde acoustique (11) soit placée au niveau de l'axe X' pour chaque point de mesure considéré, puis en déterminant pour chaque point le capteur (12) ayant reçu le signal réfléchi avec l'amplitude maximale pour un même temps de vol considéré.

4. Procédé selon l'une des revendications 1 à 3, **caractérisé en ce que** au cours de la deuxième étape (32), l'alignement de l'axe X de la sonde acoustique (11) avec l'axe de référence X' est réalisé, après repérage de l'axe de référence X', en actionnant le bras manipulateur du robot de façon à placer la sonde acoustique (11) selon une orientation telle que le signal réfléchi par l'axe de référence soit reçu avec une amplitude maximum par des capteurs formant une même première rangée (51) alignée suivant l'axe X de la sonde et que les capteurs d'extrémités (52, 53) de cette rangée reçoivent le signal réfléchi par l'axe X' de référence pour des temps de vol sensiblement égaux.

5. Procédé selon la revendication 4, **caractérisé en ce que** l'alignement de l'axe X de la sonde acoustique (11) avec l'axe de référence X' est réalisé en actionnant le bras manipulateur du robot de façon à placer la sonde acoustique (11) selon une orientation telle que le signal réfléchi par l'axe de référence X' soit reçu avec une amplitude maximale par des capteurs formant la rangée médiane (51) de la sonde acoustique (11) suivant l'axe Y.

6. Procédé selon l'une des revendications 4 ou 5, **caractérisé en ce que**, au cours de la troisième étape (33), la sonde acoustique (11) est déplacée par le bras manipulateur en translation suivant une direction Y' perpendiculaire à l'axe fixe de référence X', de telle façon que le signal réfléchi par l'axe de référence X' soit reçu avec une amplitude maximum par des capteurs formant une seconde rangée (61) distincte de la première rangée (51) de capteurs utilisée pour aligner l'axe X de la sonde sur l'axe de référence X', puis subit un mouvement de rotation de son plan autour de l'axe X de telle façon que l'amplitude du signal acoustique reçu par les capteurs formant cette seconde rangée (61) soit sensiblement égale à celle reçue au cours de la seconde étape (32) par les capteurs formant la première rangée (51).

7. Procédé selon l'une quelconque des revendications précédentes **caractérisé en ce que**, la position de la sonde acoustique (11) à l'instant considéré ainsi que la position et l'orientation des éléments fixes de référence dans le repère de référence, déterminées de manière théorique, étant transmises à l'automate, l'automate procède par lui-même, à chaque étape, à un positionnement a priori de la sonde acoustique (11) et affine ce positionnement grâce aux mesures délivrées par ladite sonde acoustique, de façon à ce que le point visé, à l'instant considéré soit situé dans le plan de focalisation de la sonde acoustique (11).

## Patentansprüche

1. Verfahren zur Durchführung der Bestimmung von Position und Ausrichtung eines Werkzeugs, das eine synthetische Schallsonde (11) aufweist, die am Manipulatorarm eines Roboters angebracht ist, wobei die Ebene der Schallsonde durch zwei senkrechte Achsen X und Y definiert ist, wobei die Bestimmung in einem bekannten Bezugskoordinatensystem des Roboters durchgeführt wird, **dadurch gekennzeichnet, dass** es die folgenden Schritte umfasst:
- einen ersten Schritt (31), in welchem mittels der Schallsonde (11) der Abstand zwischen der Schallsonde und einem Punkt der Fläche eines punktförmigen Bezugsziels (22), das eine feste Position einnimmt, bestimmt wird, wobei dieser Abstand für drei verschiedene Positionen der Schallsonde (11) gegenüber dem Ziel (22) bestimmt wird, wobei die Position der Schallsonde (11) in Bezug auf den Manipulatorarm geometrisch aus den durchgeführten Messungen abgeleitet wird;
- einen zweiten Schritt (32), in welchem von der Schallsonde (11) durchgeführte Amplituden- und/oder Laufzeitmessungen verwendet werden, um die Bestimmung einer festen Bezugsachse X' durchzuführen, die durch ein geradliniges rohrförmiges Ziel (23) verkörpert wird, indem die Schallsonde (11) verlagert wird und indem sie nacheinander in verschiedenen Punkten der Achse X' positioniert wird, und um die Bezugsachse X der Schallsonde (11) auf die feste Bezugsachse X' auszurichten;
- einen dritten Schritt (33), in welchem die Schallsonde (11) entlang einer Achse Y' verlagert wird, die zu der festen Bezugsachse X' senkrecht ist, und von der Schallsonde (11) durchgeführte Amplituden- und/oder Laufzeitmessungen verwendet werden, um die Ausrichtung der Ebene der Schallsonde (11) so zu ändern, dass die Achse Y der Schallsonde auf diese senkrechte Achse Y' ausgerichtet wird;
wobei die Ausrichtung der Achse X der Sonde parallel zur Bezugsachse X' und die Ausrichtung der Achse Y der Sonde auf die Achse Y' eine Bezugsausrichtung der Schallsonde (11) definieren, ausgehend von welcher die Ausrichtungsänderungen bestimmt werden, welche die Schallsonde (11) durch den Manipulatorarm des Roboters erfährt.

2. Verfahren nach Anspruch 1, **dadurch gekennzeichnet, dass** die Bestimmung des festen Bezugsziels (22) durchgeführt wird, indem die Schallsonde (11) an das feste Bezugsziel entlang einer gegebenen Annäherungsrichtung angenähert wird, bis sich der Fokussierungsbereich der Schallsonde (11) auf der Fläche des Ziels (22) befindet, und indem der Abstand gemessen wird, der dann die Schallsonde (11) von der Fläche des Ziels (22) trennt, wobei dieser Vorgang für drei verschiedene Annäherungsrichtungen wiederholt wird.

3. Verfahren nach einem der Ansprüche 1 oder 2, **dadurch gekennzeichnet, dass** die Bestimmung der Bezugsachse X' durchgeführt wird, indem die Schallsonde (11) an die Bezugsachse X' in verschiedenen Punkten dieser Letzteren angenähert wird, bis sich der Fokussierungsbereich der Schallsonde (11) für jeden betrachteten Messpunkt an der Achse X' befindet, und indem dann für jeden Punkt der Sensor (12) bestimmt wird, der für ein und dieselbe betrachtete Laufzeit das reflektierte Signal mit der maximalen Amplitude empfangen hat.

4. Verfahren nach einem der Ansprüche 1 bis 3, **dadurch gekennzeichnet, dass** im zweiten Schritt (32) die Ausrichtung der Achse X der Schallsonde (11) mit der Bezugsachse X', nach Bestimmung der Bezugsachse X', durchgeführt wird, indem der Manipulatorarm des Roboters derart betätigt wird, dass die Schallsonde (11) mit einer solchen Ausrichtung angeordnet wird, dass das von der Bezugsachse reflektierte Signal mit einer maximalen Amplitude durch Sensoren empfangen wird, die ein und dieselbe, entlang der Achse X der Sonde ausgerichtete erste Reihe (51) bilden, und dass die Sensoren an den Enden (52, 53) dieser Reihe das von der Bezugsachse X' reflektierte Signal für Laufzeiten empfangen, die im Wesentlichen gleich sind.

5. Verfahren nach Anspruch 4, **dadurch gekennzeichnet, dass** die Ausrichtung der Achse X der Schallsonde (11) mit der Bezugsachse X' durchgeführt wird, indem der Manipulatorarm des Roboters derart betätigt wird, dass die Schallsonde (11) mit einer solchen Ausrichtung angeordnet wird, dass das von der Bezugsachse X' reflektierte Signal mit einer maximalen Amplitude durch Sensoren empfangen wird, welche die mittlere Reihe (51) der Schallsonde (11) entlang der Achse Y bilden.

6. Verfahren nach einem der Ansprüche 4 oder 5, **dadurch gekennzeichnet, dass** im dritten Schritt (33) die Schallsonde (11) von dem Manipulatorarm entlang einer Richtung Y' translatorisch verlagert wird, die zu der festen Bezugsachse X' senkrecht ist, derart, dass das von der Bezugsachse X' reflektierte Signal mit einer maximalen Amplitude durch Sensoren empfangen wird, die eine zweite Reihe (61) bilden, die von der zum Ausrichten der Achse X der Sonde auf die Bezugsachse X' verwendeten ersten Reihe (51) von Sensoren verschieden ist, und anschließend eine Drehbewegung ihrer Ebene um die Achse X erfährt, derart, dass die Amplitude des Schallsignals, das durch die diese zweite Reihe (61) bildenden Sensoren empfangen wird, im Wesentlichen gleich derjenigen ist, die im zweiten Schritt (32) durch die die erste Reihe (51) bildenden Sensoren empfangen wird.

7. Verfahren nach einem der vorhergehenden Ansprüche, **dadurch gekennzeichnet, dass**, wenn die Position der Schallsonde (11) zu dem betrachteten Zeitpunkt sowie die Position und die Ausrichtung der festen Bezugselemente in dem Bezugskoordinatensystem, die auf theoretischem Wege bestimmt wurden, zu dem Automaten übertragen werden, der Automat selbst in jedem Schritt eine a-priori-Positionierung der Schallsonde (11) durchführt und diese Positionierung mithilfe der Messungen verfeinert, die von der Schallsonde geliefert werden, derart, dass sich der zum betrachteten Zeitpunkt anvisierte Punkt in der Fokussierungsebene der Schallsonde (11) befindet.

## Claims

1. A method for carrying out the tracking of the position and orientation of a tool comprising a synthetic acoustic probe (11) mounted on the manipulator arm of a robot, the plane of said acoustic probe being defined by two perpendicular axes X and Y, said tracking being carried out in a frame of reference known to said robot, **characterized in that** it comprises the following steps:
- a first step (31) in which the distance between the acoustic probe and a point on the surface of a point reference target (22) occupying a fixed position is determined by means of the acoustic probe (11), this distance being determined for three different positions of the acoustic probe (11) with respect to the target (22), the position of the acoustic probe (11) with respect to the manipulator arm being geometrically deduced from the measurements carried out;
- a second step (32) in which amplitude and/or flight time measurements made by the acoustic probe (11) are used in order to carry out the tracking of a fixed reference axis X', marked by a rectilinear tubular target (23), while moving the acoustic probe (11) and successively positioning it at different points on said axis X' and in order to align the reference axis X of the acoustic probe (11) with the fixed reference axis X';
- a third step (33) in which the acoustic probe (11) is moved along an axis Y' that is perpendicular to the fixed reference axis X' and amplitude and/or flight time measurements made by the acoustic probe (11) are used in order to modify the orientation of the plane of the acoustic probe (11) so as to align the axis Y of the acoustic probe with this perpendicular axis Y';
the parallel alignment of the axis X of the probe with the reference axis X' and the alignment of the axis Y of the probe with the axis Y' defining a reference orientation of the acoustic probe (11) from which the changes of orientation imposed on the acoustic probe (11) by the manipulator arm of the robot are determined.

2. The method as claimed in claim 1, **characterized in that** the tracking of the fixed reference target (22) is carried out by moving the acoustic probe (11) closer to said fixed reference target along a given direction of approach until the focal zone of the acoustic probe (11) is positioned on the surface of the target (22), and by measuring the distance then separating the acoustic probe (11) from the surface of the target (22), this operation being repeated for three separate directions of approach.

3. The method as claimed in either of claims 1 and 2, **characterized in that** the tracking of the reference axis X' is carried out by moving the acoustic probe (11) closer to the reference axis X' at different points on the latter, until the focal zone of the acoustic probe (11) is positioned at the level of the axis X' for each measurement point in question, then by determining, for each point, the sensor (12) that received the reflected signal with maximum amplitude for one and the same flight time in question.

4. The method as claimed in one of claims 1 to 3, **characterized in that** during the second step (32), the alignment of the axis X of the acoustic probe (11) with the reference axis X' is carried out, after tracking of the reference axis X', by actuating the manipulator arm of the robot so as to position the acoustic probe (11) along an orientation such that the signal reflected by the reference axis is received with maximum amplitude by sensors forming one and the same first row (51) that is aligned along the axis X of the probe and that the end sensors (52, 53) of this row receive the signal reflected by the reference axis X' for substantially equal flight times.

5. The method as claimed in claim 4, **characterized in that** the alignment of the axis X of the acoustic probe (11) with the reference axis X' is carried out by actuating the manipulator arm of the robot so as to position the acoustic probe (11) along an orientation such that the signal reflected by the reference axis X' is received with maximum amplitude by sensors forming the middle row (51) of the acoustic probe (11) along the axis Y.

6. The method as claimed in either of claims 4 and 5, **characterized in that**, during the third step (33), the acoustic probe (11) is moved by the manipulator arm translationally along a direction Y' that is perpendicular to the fixed reference axis X', in such a way that the signal reflected by the reference axis X' is received with maximum amplitude by sensors forming a second row (61), separate from the first row (51) of sensors used for aligning the axis X of the probe with the reference axis X', then is subjected to a rotational movement of its plane around the axis X in such a way that the amplitude of the acoustic signal received by the sensors forming this second row (61) is substantially equal to that received during the second step (32) by the sensors forming the first row (51).

7. The method as claimed in any one of the preceding claims, **characterized in that** as the position of the acoustic probe (11) at the instant in question and the position and orientation of the fixed reference elements in the frame of reference, these being determined theoretically, are transmitted to the logic controller, the logic controller proceeds by itself, in each step, to an a priori positioning of the acoustic probe (11) and refines this positioning by virtue of the measurements provided by said acoustic probe so that at the instant in question, the target point is located in the focal plane of the acoustic probe (11).
